# EUROPÄISCHE PATENTSCHRIFT

(11) **EP 0 514 825 B1**
(45) Veröffentlichungstag und Bekanntmachung des Hinweises auf die Patenterteilung: **06.03.1996**
(21) Anmeldenummer: 92108409.1
(22) Anmeldetag: 19.05.1992
(51) Int. Cl.: A61C 13/277, F16F 1/44

(54) **Feder eines Riegelelementes für eine abnehmbare Zahnprothese**
Spring for a clamping device for a removable dental prosthesis
Ressort pour un élément de verrouillage pour une prothèse dentaire démontable

(30) Priorität: 21.05.1991 DE 9106247 U
(43) Veröffentlichungstag der Anmeldung: 25.11.1992
(73) Patentinhaber: FR- KONSTRUKTIONSELEMENTE FÜR ZAHNPROTHETIK GmbH & CO, D-67620 Kaiserslautern (DE)
(72) Erfinder: Klein, Franz Josef, D-8944 Grönenbach (DE); Mayer, Ralf, Dipl.-Ing., D-6750 Kaiserslautern (DE); Peters, Bernd, D-6720 Speyer (DE)
(74) Vertreter: Bernhardt, Winfrid, Dr.-Ing.

(56) Entgegenhaltungen:
- EP-A- 0 136 671
- CH-A- 447 723
- DE-A- 2 141 353
- DE-A- 3 426 439

## Beschreibung

Die Erfindung betrifft eine Feder eines einschließlich der Feder in einem flachen Hohlraum angeordneten, an einer offenen, vorderen Schmalseite des Hohlraumes aus diesem herausragenden Reges zum Sichern eines abnehmbaren Zahnprothesenteils an einem festsitzenden Prothesenteil in einer Verbindung der beiden Zahnprothesenteile, in der diese ineinanderschiebbar und in der Endstellung starr, aber lösbar zusammengesetzt sind und mittels des, an dem einen Zahnprothesenteil angeordneten und hinter einem Gegenlager, insbesondere in einer Kerbe, des anderen Zahnprothesenteils einrastenden, Riegels gesichert sind.

Eine solche, etwa S-förmige Feder ist aus der DE-OS 34 19 359 bekannt. Sie ist weiterentwickelt worden zu einer in der DE-OS 38 38 222 beschriebenen, gestanzten Feder mit einem federnden Abschnitt in Form einer 9 oder einer 6. Dieser Abschnitt ist nach dem DE-GM 90 07 178 verdoppelt durch umgekehrtes Aneinandersetzen.

Aus der DE-A-34 26 439 ist eine axial zusammendrückbare Feder eines Scharniers für Türen von Schrankgestellen der Nachrichtentechnik bekannt, die von einer Reihe balgförmiger Federelemente gebildet wird, die die Gestalt abgeplatteter, hohler Zylinder haben und durch steife Stege miteinander verbunden sind. Die Stege liegen auf der Federachse, die Federelemente erstrecken sich quer zu ihr. Der Querschnitt der Feder ist etwa quadratisch.

Der Erfindung liegt die Aufgabe zugrunde, eine weitere Feder der eingangs genannten Art zu schaffen.
Die erfindungsgemäße Feder ist ausgebildet in Form nebeneinander angeordneter Balken, die abwechselnd an ihren Enden und auf ihrer Mitte verbunden sind.

Die Feder stellt so eine Reihenschaltung auf Biegung beanspruchter Balken dar.
Die Verbindungen der Balken brauchen nicht für die Aufnahme von Biegekräften dimensioniert zu sein. Sie sollen in dem bevorzugten Falle einer Druckfeder Druckkraft übertragen und im Falle einer Zugfeder Zugkraft.

Die Feder kann sehr einfach hergestellt werden, indem nur eine Platte abwechselnd mit zwei schmalen Einschnitten von den beiden Seiten her aufeinander zu und mit schmalen Ausschnitten versehen wird, um die verbundenen Balken auszubilden.

Die Einschnitte und Ausschnitte, allgemeiner betrachtet die Zwischenräume zwischen den Balken, brauchen bei einer Druckfeder nur so breit zu sein, wie zur Aufnahme der Balkenbiegung erforderlich. Bei einer Zugfeder brauchen sie im Prinzip überhaupt keine Breite zu haben.
Die Feder stellt damit bei geringstem Platzbedarf einen verhältnismäßig großen Federweg zur Verfügung. Für den insbesondere vorgesehenen Einsatz der Feder in der Zahntechnik ergibt sich aus dem geringen Hohlraum der Feder der weitere Vorteil größerer Hygiene.

Als Kunststoffe zur Herstellung der Feder eignen sich insbesondere Polyaryletherketone.

In der Regel wird die Feder eines Gehäuses zur Führung bedürfen.

Die Zeichnungen geben ein Ausführungsbeispiel der Erfindung wieder.
- Fig. 1: zeigt eine Feder in Draufsicht,
- Fig. 2: zeigt die Feder in einem Gehäuse in Draufsicht,
- Fig. 3: zeigt einen Längsschnitt entlang der Mittellinie von Fig. 2,
- Fig. 4: zeigt eine Ansicht gemäß Fig. 2 von oben.

Die dargestellte Feder dient dem eingangs genannten Einsatzzweck in einer Zahnprothese.

Sie ist hergestellt aus einer 0,4 mm dicken Platte eines unter dem Handelsnamen Ultrapek bekannten, von der BASF hergestellten, teilkristallinen Polyaryletherketones in 5,4 mm Länge und 3,0 mm Breite, und zwar durch Excimerlaser-Bestrahlung, bei der unter Anwendung einer die zu erzeugende Form aufweisenden Metallblende die langkettigen Moleküle des Kunststoffs auf den zu entfernenden Flächen aufgebrochen werden und die Molekülbruchstücke entweichen, wie in dem Prospekt "Materialbearbeitung mit Excimerlasern" der Lambda-Physik GmbH, Göttingen, näher angegeben.

Die vorne in einen Riegel 1 übergehende eigentliche Feder 2 setzt sich zusammen aus sechs Balken 3 bis 8.

Der Balken 3 hat mit dem Riegel 1 zwei seitliche Verbindungen 9 und mit dem nächsten Balken 4 eine mittige Verbindung 10, dieser wiederum mit dem nächsten Balken 5 zwei seitliche Verbindungen 9 usw.. Am Ende der Feder sind an dem Balken 8 statt zweier seitlicher Verbindungen 9 nur noch zwei Ansätze 11 ausgebildet.

Die Balken 3 bis 8 sind durch parallele Ausschnitte 12 und Einschnitte 13 gebildet, wobei die seitlichen Verbindungen 9 an den Enden der Ausschnitte 12 und die mittigen Verbindungen 10 zwischen den Enden der Einschnitte 13 stehengeblieben sind.

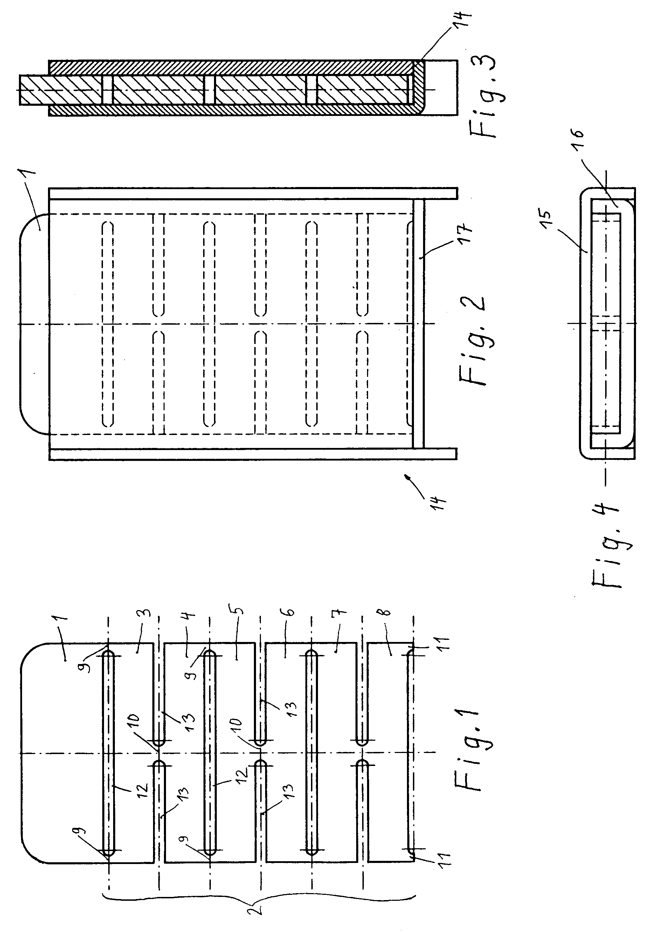

Das zugehörige Gehäuse 14 ist in der aus Fig. 2 bis 4 ersichtlichen Weise aus zwei Blechteilen 15 und 16 zusammengesetzt, die miteinander verklebt oder verlötet sind. Das Blech besteht aus einer hochschmelzenden Legierung der Zahntechnik.

Die Feder 2 ist mit den Ansätzen 11 gegen eine an dem Blechteil 16 abgewinkelte Rückwand 17 des Gehäuses abgestützt. Auf ihrem Querschnitt ist sie ringsum von dem Gehäuse mit nur geringfügigem Spiel umschlossen.
Der Riegel 1 ist in dem Gehäuse geführt und ragt im ungespannten Zustand der Feder mit etwas mehr als einem Drittel seiner Länge vorne aus dem Gehäuse heraus. Der herausragende Teil läßt sich unter Anspannung der Feder im wesentlichen vollständig in das Gehäuse einschieben.

Beim Anspannen der Feder wölbt sich der Balken 3 nach oben, der Balken 4 nach unten, der Balken 5 nach oben usw..

Statt durch Excimerlaser-Bestrahlung kann die Feder auch durch Plasma-Ätzen hergestellt werden unter Abdeckung des Materials mit einer die Form der Feder aufweisenden Schutzschicht, die z.B. durch Auftragen eines Fotolackes und Belichten wiederum unter Abdeckung mit einer Maske von der Form der Feder hergestellt werden kann.

## Patentansprüche

1. Feder (2) eines einschließlich der Feder (2) in einem flachen Hohlraum (14) angeordneten, an einer offenen, vorderen Schmalseite des Hohlraumes (14) aus diesem herausragenden Riegels (1) zum Sichern eines abnehmbaren Zahnprothesenteils an einem festsitzenden Zahnprothesenteil in einer Verbindung der beiden Zahnprothesenteile, in der diese ineinanderschiebbar und in der Endstellung starr, aber lösbar zusammengesetzt sind und mittels des, an dem einen Zahnprothesenteil angeordneten und hinter einem Gegenlager, insbesondere in einer Kerbe, des anderen Zahnprothesenteils einrastenden, Riegels (1) gesichert sind,
dadurch gekennzeichnet,
daß die Feder (2) in Form nebeneinander angeordneter Balken (3-8) ausgebildet ist, die abwechselnd an ihren Enden und auf ihrer Mitte verbunden (9 bzw. 10) sind.

2. Feder nach Anspruch 1,
dadurch gekennzeichnet,
daß die Verbindung (9;10) der Balken (3-8) im wesentlichen nicht für die Aufnahme von Biegekräften dimensioniert sind.

3. Feder nach Anspruch 1 oder 2,
dadurch gekennzeichnet,
daß sie aus einer Platte geschnitten, vorzugsweise gestanzt, ist.

4. Feder nach einem der Ansprüche 1 bis 3,
dadurch gekennzeichnet,
daß sie aus einem Kunststoff besteht, vorzugsweise einem Polyaryletherketon.

5. Feder nach Anspruch 4,
dadurch gekennzeichnet,
daß sie durch Excimerlaser-Bestrahlung hergestellt ist.

## Claims

1. A spring (2) for a clamping device (1) for securing a removable dental prosthesis part to a fixed prosthesis part, said clamping device, including said spring (2), being arranged in a shallow hollow space (14) and projecting from an open narrow end of the hollow space (14), in a connection of the two dental prosthesis parts in which said parts are interlockable and in the final position are rigidly but releasably put together and are secured by said clamping device (1) mounted on one of the prosthesis parts and latching behind a catch, particularly a notch, in the other prosthesis part,
characterised in that
the spring (2) is constructed in the shape of adjacent bars (3-8) connected alternately at their ends and in their middle (9 and 10, respectively).

2. The spring according to Claim 1,
characterised in that
the connections (9; 10) of the bars (3-8) are not essentially dimensioned to take up flexional forces.

3. The spring according to Claim 1 or 2,
characterised in that
said spring is cut, preferably punched, from a plate.

4. The spring according to one of Claims 1 to 3,
characterised in that
said spring consists of a plastic, preferably polyaryletherketone.

5. A spring according to Claim 4,
characterised in that
said spring is produced by excimer laser irradiation.

## Revendications

1. Ressort (2) pour un verrou (1) agencé avec ledit ressort (2) dans un espace creux plat (14) et faisant saillie sur ledit espace creux plat (14), sur un côté avant étroit ouvert, pour le verrouillage d'un élément de prothèse dentaire amovible à un élément de prothèse fixe, selon un assemblage des deux éléments de prothèse dentaire, dans lequel ceux-ci sont emboîtables et assemblés de façon rigide mais démontable, en position finale, et verrouillés à l'aide dudit verrou (1) agencé à l'un des éléments de prothèse dentaire et s'engageant par encliquetage derrière un contre-appui, notamment une encoche, de l'autre élément de prothèse dentaire, caractérisé en ce que
le ressort (2) consiste en des barrettes (3-8) agencées l'une à côté de l'autre et reliées entre elles, alternativement, par leurs extrémités et par leur milieu (9 ou 10).

2. Ressort selon la revendication 1 caractérisé en ce que les liaisons (9; 10) des barrettes (3-8) ne sont substantiellement pas dimensionnées pour résister à des forces de flexion.

3. Ressort selon la revendication 1 ou 2 caractérisé en ce qu'il est découpé d'une plaque, de préférence par poinçonnage.

4. Ressort selon l'une des revendications 1 à3 caractérisé en ce qu'il consiste en une matière synthétique, de préférence une polyarylethercétone.

5. Ressort selon la revendication 4 caractérisé en ce qu'il est fabriqué par rayonnement laser excimer.
